# EUROPEAN PATENT APPLICATION

(11) **EP 4 850 530 A1**
(43) Date of publication of application: **09.12.2026**
(21) Application number: 26182911.3
(22) Date of filing: 03.06.2026
(51) Int. Cl.: A01N 1/143

(54) **SYSTEM AND METHOD FOR BLOOD WASH OUT AND PERFUSION**

(30) Priority: 06.06.2025 US 202563818860 P; 01.06.2026 US 202619694144
(71) Applicant: Alcor Life Extension Foundation, Scottsdale, AZ 85260 (US)
(72) Inventor: Graber, Steven, Arizona (US); Graber, Jacob, Arizona (US)
(74) Representative: Reddie & Grose LLP

(57) **Abstract**

A perfusion and washout system for perfusing a cryogenic specimen having an arterial cannula and a venous cannula. The system may comprise a washout solution reservoir, a pump in fluid communication with the washout solution reservoir, a heat exchanger in fluid communication with the pump, a back pressure regulator comprising an inlet and an outlet, a pressure regulator coupled to the back pressure regulator, an effluent reservoir, a recirculation reservoir, and a return line from the back pressure regulator in fluid communication with the recirculation reservoir. The back pressure regulator may be configured to regulate upstream pressure at the first junction.

## Description

### CROSS REFERENCE TO RELATED APPLICATIONS

This application claims priority to U.S. Provisional Patent Application Serial No. 63/818,860, filed June 6, 2025, entitled SYSTEM AND METHOD FOR BLOOD WASH OUT AND PERFUSION, and to U.S. Patent Application Serial No. 19/694,144, filed June 1, 2026, entitled SYSTEM AND METHOD FOR BLOOD WASH OUT AND PERFUSION, both of which are incorporated by reference herein in their entirety.

### BACKGROUND OF THE TECHNOLOGY

Cryonics is a process of preserving human bodies or brains at extremely low temperatures in the hope that future technology will be able to restore vital function. The goal of cryonics is to stall irreversible death and preserve the body or brain until medical science advances to the point where it can address the relevant issues. The process involves cooling the body or brain down to a temperature of -196°C (-320°F) using liquid nitrogen, which halts the metabolic process and slows physical and chemical processes within the tissue to the point that they are effectively stopped. The body or brain is then stored in a specially designed cryostat, which maintains the low temperature indefinitely.

It's important to note that cryonics is not the same as cryogenics, the latter of which refers to the science of producing very low temperatures and characterizing the behavior of materials at those temperatures. Cryogenics has many scientific applications, such as preserving biological samples for research purposes or storing embryos for fertility treatments.

Cryogenics deals with the production and behavior of materials at extremely low temperatures, usually below -150 degrees Celsius (-238 degrees Fahrenheit) and sometimes as low as -273.15 degrees Celsius (-459.67 degrees Fahrenheit), which is known as absolute zero. At these temperatures, materials can exhibit unique condensed matter behaviors such as superconductivity, where electrical resistance drops to zero, and superfluidity, where liquids flow with no viscosity.

Cryopreservation refers to the process of preserving a biological sample, such as cells, tissues, or organs at extremely low temperatures. This process involves cooling the specimen to a cryogenic temperature, which halts biological activity and preserves the sample structurally and chemically for future study. A biological specimen which has been cryopreserved is referred to as a cryopreserved specimen.

Cooldown refers to the gradual cooling of a biological specimen to cryogenic temperatures. Once a biological specimen has been subject to cooldown, it becomes cryopreserved. Cooldown is typically performed in a controlled-rate freezer.

Cryoprotection refers to the process of preparing a biological sample for cryopreservation by treating it with cryoprotective agents. Cryoprotective agents are a class of chemical compounds, e.g. glycerol or dimethyl sulfoxide (DMSO), which help prevent damage to, or "protect" the cells during the cryopreservation process by various mechanisms, including modifying the water content, viscosity, and ice formation energy dynamics of the biological system. A biological specimen which has been treated with cryoprotective agents is referred to as a cryoprotected specimen.

Cryopreservation is commonly used in research laboratories and medical settings to store biological samples for long periods of time. Cryopreserved specimens, including suspended cells, suspended DNA, gametes, organs, organoids, pollen, seeds, et al. can be stored at cryogenic temperatures for an indefinite period and then thawed for use in a variety of applications, including cell culture, transplantation, and genetic analysis. Specimens may be treated with cryoprotective agents depending on their size and morphology. In some cases, entire human bodies may be cryoprotected and cryopreserved.

Controlled perfusion refers to the use of an external mechanical system to deliver a liquid, referred to as the perfusate, to the tissue of a biological specimen via the specimen's circulatory system. The external mechanical system, referred to as a perfusion system, may control the temperature, pressure, flow rate, chemical composition, or other physical attributes of the perfusate at the point of infusion into the specimen. The perfusion system may also have means to physically position, externally cool, surgically isolate, or otherwise manipulate the specimen in preparation for perfusate infusion.

Cryoprotectant perfusion, or cryoprotection, refers to the controlled perfusion of a biological specimen with a perfusate that contains cryoprotective agents.

Perfusate which has passed through a biological specimen is referred to as effluent.

Once a specimen has been cryopreserved, it is stored in a cryogenic vessel. The most common cryogenic vessel is a Dewar vessel. Dewar vessels, also known as Dewar flasks or Dewars, are specialized containers used for the storage and transportation of extremely cold materials, such as liquid nitrogen, oxygen, or helium. Dewar vessels may consist of two containers, one nested within the other, with the space in between them evacuated of most gasses to achieve a near-vacuum. The inner container may be made of glass, composite, or metal, and encloses the cryogenic material. The outer container may be made of metal and provides structure, supporting and protecting the inner container and preventing infiltration of gases into the evacuated space. The evacuated space may be partially occupied by alternating layers of insulative and reflective materials, collectively known as superinsulation, which blocks radiative transfer of heat from the outer container to the inner container and improves the insulative property of the vessel.

Dewar vessels are commonly used in scientific research, medical laboratories, and industrial applications. They are designed to minimize thermal energy transfer between the environment and the contents of the vessel, allowing for long-term storage and transportation of cryogenic materials. Dewar vessels may be open or closed to the atmosphere. Closed Dewar vessels may be equipped with pressure-relief valves to prevent the build-up of pressure within the container due to evaporation of the stored liquid.

In the case of cryopreserving whole humans, the Dewar vessels of suitable size are extremely heavy and typically immobile. The human to be cryopreserved may be located anywhere on the planet, whereas the Dewar vessels intended to store the human are typically permanently housed near the cryoprotectant perfusion system. The time-sensitive nature of biological systems creates a necessity to perform controlled perfusion immediately following legal declaration of death, regardless of location, in the interest of maximizing the structural integrity and biological viability of the cells in the specimen. A biological system may comprise a specimen, patient, human, and/or any other life form to which cryopreservation is to be performed and these terms may be used interchangeably throughout the present application.

Minimizing ischemic time, i.e. time spent without cardiopulmonary function, is necessary to maximize the viability of cells in the specimen to be cryopreserved. Warm (normothermic) ischemia is more deleterious than cold (hypothermic) ischemia, partly due to metabolic temperature dependence. Colder tissue temperatures exponentially reduce metabolic activity and reduce the rate of cell death. This creates an imperative to rapidly cool biological systems immediately following legal acquisition.

Blood within biological systems contains clotting agents and immune cells which may damage the vasculature and interfere with the action of cryoprotectant agents. These complications can be avoided by initiating controlled perfusion immediately after cessation of cardiopulmonary function, which will displace or "wash" blood components out of the specimen.

Washout refers to the controlled perfusion of a specimen to flush blood and blood components out of the circulatory system. Washout may be performed with a washout solution which mimics the composition of blood plasma. This type of washout solution is a water-based isotonic blood equivalent that does not contain cryoprotective agents and is designed to minimize osmotic stress on the cells of the specimen. Medications or other non-cryoprotective compounds may be administered during the washout procedure.

Controlled perfusion provides an opportunity to rapidly cool the biological specimen to reduce the impact of warm ischemia. The vasculature of biological systems has significantly greater surface area than the specimen exterior surface and the vasculature comes into intimate contact with most tissues within the specimen. By removing heat from the perfusate, before it is infused into the specimen, such that the perfusate is very close to its freezing temperature, a high rate of cooling in the specimen can be achieved relative to immersion in liquid of the same temperature.

A typical cryonic controlled perfusion system may be based on a pressure-controlled feedback loop. The flow path starts at a chilled reservoir of perfusate. A computer-controlled pump in communication with the reservoir pushes perfusate into a length of tubing which may be in communication with the patient's circulatory system via a surgically placed arterial cannula (ascending aorta). Several elements may be placed in the line between the pump and the patient, including filters, bubble traps, heat exchangers, temperature sensors, flow sensors, et al.

During a controlled perfusion procedure, the pressure of fluid delivered to the arterial cannula of the specimen, patient, and/or human needs to be tightly controlled to avoid perfusion injury, or damage to the vasculature caused by excessively high pressures. A pressure transducer may be in communication with the perfusate within the arterial cannula. A computer program may be required, which reads the arterial pressure signal and modulates the speed of the pump to maintain the desired infusion pressure.

After traversing the vasculature, effluent exits the body of the patient via tubing in communication with a surgically placed venous cannula (vena cava/right atrium) and is either dumped into a waste container or returned to the original reservoir for reuse.

The standard approach is viable for most cases, however major flaws are exposed during perfusion of cryonics patients with significant edema or other forms of constricted vasculature which limit the rate at which fluid can flow through the tissue.

The first flaw is the reduced effectiveness of temperature control. The perfusate in the reservoir is chilled to remove heat from the body of the patient, and an additional heat exchanger may remove heat from the perfusate after it leaves the pump, but the perfusate re-warms as it travels along the tube from the reservoir to the patient. The rewarming becomes more significant as the flow rate decreases, and liquid spends more time traveling in the tube, which limits the rate at which heat energy can be removed from the patient.

The second flaw in the typical system is sensitivity to flow resistance changes and hysteresis in pressure control feedback. Rapid changes in flow resistance may cause pressure spikes in the arterial circuit as the system cannot change the speed of the pump instantaneously. Improperly tuned feedback loops may also introduce a risk of feedback oscillation. Pressure spikes in the circuit may cause tubing to burst and expose perfusionists to biohazardous materials.

The following is an overview of one possible process for human cryoprotection and cryopreservation, from legal declaration of death to placement in a Dewar vessel for long-term storage.

Immediately after legal declaration of death, efforts are made to physically and medically stabilize the patient. The goal is to rapidly cool the body to near-freezing temperatures and administer medications which slow down metabolic processes to delay cell death. Cardiopulmonary support (CPS; chest compressions and ventilation) may be used to maintain blood circulation and oxygenation while medications are administered. The patient may be placed in a bath of circulating ice water to facilitate rapid cooling by skin contact.

Surgical access may be established through the solar plexus and cannulas are surgically located in the ascending aorta and right atrium to fully bypass the heart. A washout system perfuses the patient at normotensive pressure via the aortic cannula with a chilled isotonic blood-equivalent washout solution containing anti-clotting agents. This further cools the body and flushes blood cells and clotting agents out of the vasculature in preparation for transport to a perfusion facility.

The washout system is then disconnected, and the patient is transported within the bath of ice water to a cryonics facility where cryoprotectant perfusion begins. A controlled perfusion system primed with chilled hypertonic cryoprotectant solution may be connected to the existing cannulas in the same manner as the washout system. The patient may be perfused with the solution, and cryoprotectants diffuse into the tissue while the high solute content of the perfusate draws water out of the tissue. The cryoprotectant solution significantly depresses the freezing temperature of the tissue, so the temperature of the administered perfusate may be progressively lowered throughout the procedure.

After cryoprotectant perfusion, the body of the patient may be rapidly cooled by forced gas convection in a controlled-rate freezer to just above the tissue glass transition temperature and then gradually cooled to cryogenic temperatures. Below the glass transition temperature, the specimen may be in a fully solid state, and the cooling rate is carefully controlled to minimize temperature gradients which may induce thermal stresses.

Once the body reaches cryogenic temperatures, it is stored in a Dewar vessel filled with liquid nitrogen. This preparation and storage method maintains the viability of the cells in the patient for an indeterminate period at extremely low temperatures.

### SUMMARY OF THE TECHNOLOGY

A system and method for perfusing a cryogenic specimen according to various embodiments of the present technology provides user with the ability to washout a cryogenic specimen prior to the transport, cryoprotectant perfusion, cooldown, and transfer of the specimen to a Dewar vessel or other type of cryogenic storage chamber.

In various embodiments a perfusion and washout system for perfusing a cryogenic specimen having an arterial cannula and a venous cannula is described. The perfusion and washout system may comprise, a washout solution reservoir, a pump, a heat exchanger, a back pressure regulator, a pressure regulator, a first junction, a second junction, an effluent reservoir, a recirculation reservoir and a return line. The pump may be in fluid communication with the washout solution reservoir. The heat exchanger may be in fluid communication with the pump. The back pressure regulator may comprise an inlet and an outlet. The pressure regulator may be coupled to the back pressure regulator. The first junction may comprise a first branch and a second branch. The first branch may be in fluid communication with the arterial cannula of the cryogenic specimen, and the second branch may be in fluid communication with the inlet of the back pressure regulator. The second junction may be in fluid communication with a return line from the venous cannula of the cryogenic specimen. The second junction may comprise a first branch and second branch. The effluent reservoir may be in fluid communication with the first branch of the second junction and the recirculation reservoir in fluid communication with the second branch of the second junction. The return line from the outlet of the back pressure regulator may be in fluid communication with the recirculation reservoir. The back pressure regulator may be configured to regulate upstream pressure at the first junction.

In various embodiments, the perfusion and washout system may further comprise a pick-up line having a first branch in communication with the recirculation reservoir and a second branch in communication with the washout solution reservoir. A first inline tubing clamp may be disposed on the first branch of the pick-up line in fluid communication with the recirculation reservoir and configured to occlude flow from the recirculation reservoir. A second inline tubing clamp may be disposed on the second branch of the pick-up line in fluid communication with the washout solution reservoir and configured to occlude flow from the washout solution reservoir.

In various embodiments, a first branch of the second junction may be configured to direct fluid to the effluent reservoir and the second branch may be configured to direct fluid to the recirculation reservoir. A third inline tubing clamp may be disposed on the first branch of the second junction in fluid communication with the effluent reservoir and configured to selectively direct fluid to the effluent reservoir. A fourth inline tubing clamp may be disposed on the second branch of the second junction in fluid communication with the recirculation reservoir and configured to selectively direct fluid to the recirculation reservoir.

In various embodiments a method of perfusing a cryogenic specimen having an arterial cannula and a venous cannula using a perfusion and washout system may comprise pumping a washout solution from a washout solution reservoir through a pump and a heat exchanger toward a first junction; delivering a first portion of the washout solution from a first branch of the first junction to the arterial cannula of the cryogenic specimen; diverting a second portion of the washout solution from a second branch of the first junction to a back pressure regulator; regulating, using the back pressure regulator, upstream pressure at the first junction; returning washout solution from the back pressure regulator to a recirculation reservoir; receiving venous return fluid from the venous cannula at a second junction; selectively directing the venous return fluid from the second junction to either an effluent reservoir or the recirculation reservoir; and selectively controlling flow of washout solution from either the washout solution reservoir or the recirculation reservoir using inline tubing clamps.

### BRIEF DESCRIPTION OF THE DRAWINGS

A more complete understanding of the present technology may be derived by referring to the detailed description when considered in connection with the following illustrative figures. In the following figures, like reference numbers refer to similar elements and steps throughout the figures. For simplicity and clarity of illustration, elements in the figures are not necessarily drawn to scale.
Figure 1 representatively illustrates a washout system and method for use with a cryogenic specimen in accordance with an exemplary embodiment of the present technology;
Figure 2 representatively illustrates phase 1 of the washout system and method for use with a cryogenic specimen in accordance with an exemplary embodiment of the present technology;
Figure 3 representatively illustrates phase 2 of the washout system and method for use with a cryogenic specimen in accordance with an exemplary embodiment of the present technology; and
Figure 4 representatively illustrates phase 3 of the washout system and method for use with a cryogenic specimen in accordance with an exemplary embodiment of the present technology.

### DETAILED DESCRIPTION OF THE DRAWINGS

The present technology may be described in terms of functional block components and various processing steps. Such functional blocks may be realized by any number of components configured to perform the specified functions and achieve various results. For example, the present technology may employ various types of basins, reservoirs, clamps, tubes, pumps, fittings, flow lines, flow regulators, pneumatic components, sensing devices, computer systems, and the like, which may carry out a variety of functions. Further, the present technology may employ any number of components for a perfusion system that prepares a specimen for storage in a cryogenic storage facility.

The present technology may comprise systems, methods and apparatus for perfusing a cryogenic specimen according to various embodiments of the present technology prior to deposit within a Dewar vessel or other type of cryogenic storage chamber. Various representative implementations of the present technology may be applied to any system for perfusing a cryogenic specimen prior to deposit within a Dewar vessel or other type of cryogenic storage chamber.

A system and method of perfusing a specimen or body may be provided that employs a method for pressure control which does not necessitate a pressure transducer or computer feedback loop. The system and method addresses the failure modes of the conventional approach in temperature and pressure control under certain circumstances.

The system and method allow may provide an additional tubing through which perfusate may bypass the patient and return to a chilled reservoir. The additional tubing branch may be in communication with the patient perfusate supply line and the branch point is proximal to the patient. In effect, the pump may be allowed to run at a high speed while the additional branch redirects back to the reservoir that fluid, which is not needed by the patient.

A backpressure regulator (BPR) may be introduced with the additional branch immediately downstream of the branch point. Conventional methods include a standard pressure regulator that controls downstream pressure, e.g. from a pressure tank at 100psi, to produce 10psi downstream while a variable flow passes through it. In contrast, a BPR is a device which regulates upstream pressure, or backpressure, e.g. to maintain the pressure tank itself at 100 psi by allowing a variable flow to exit it. In this way the BPR controls the pressure within the additional tubing branch point where it splits between the patient and the additional branch. Because the patient infusion point is in proximity to the branch point, the pressure of perfusate infusion is effectively controlled in the same manner.

The BPR may introduce pressure control to the perfusion process without necessitating a computer/sensor/pump feedback loop as required by the conventional approach. Instead, the BPR upstream pressure set point is modified by introducing pressurized air to a control dome in the BPR. This can be accomplished by various means, including mechanical or electronic pressure regulators and manually or automatically supplied compressed air. The BPR responds much more rapidly to changes in pressure than a computer feedback loop. In this way, the susceptibility to pressure control oscillations and the pressure control failure mode of the conventional approach are addressed.

The effective length of tubing along which perfusate can be rewarmed by the environment may be minimized in this approach by positioning the branch point close to the patient infusion point. In this way, the temperature control failure mode of the conventional approach is addressed.

The conventional approach has the property of positive displacement, where each unit of fluid moved by the main pump corresponds to one unit of fluid moved through the patient. In contrast, the present system and method does not have the property of positive displacement, that is, the pump will move some number of units of liquid which are independent of the number of units flowing through the patient.

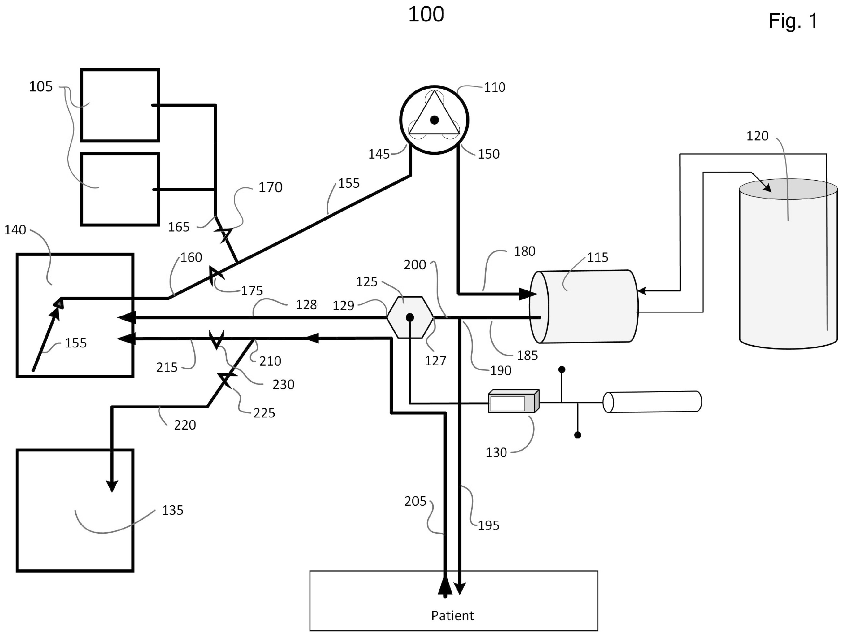

Referring now to Figure 1, methods and apparatus for a perfusion and washout system 100 for perfusing a cryogenic specimen are shown. The perfusion and washout system 100 may comprise a washout solution reservoir 105, a fluid pump 110, a heat exchanger 115, an ice water basin/chiller 120, a back pressure regulator ("BPR") 125, a pressure regulator 130 with an air tank, an effluent reservoir 135, and a recirculation reservoir 140. The components may be connected via tubing. Some examples of tubing include but are not limited to biopharmaceutical sterilizable vinyl or silicone tubing in various sizes and wall thicknesses.

The washout solution reservoir 105 may comprise one or more multi-layered polyethylene (PE) bladders with an integrated screw or compression cap. The washout solution reservoir 105 may be filled with an isotonic blood-equivalent solution designed for washing out the blood components prior to cryoprotectant perfusion.

The fluid pump 110 may comprise a pump designed to move the isotonic blood-equivalent solution at a flow rate above the maximum flow rate required by the patient and at a pressure above the normotensive pressure of the human circulatory system. The fluid pump 110 may be a positive displacement pump, a centrifugal pump, or other type of pump which meets the flow and pressure specifications. In the present embodiment fluid pump 110 is a peristaltic (roller) pump using flexible pump shoe tubing.

The heat exchanger 115 may comprise a cardioplegia-style heat exchanger or any other heat exchanger design capable of cooling liquid at the flow rate specified. The heat exchanger 115 may be in fluid communication with and/or connected to the ice water basin/chiller 120.

The BPR 125 may comprise a specialized control valve used in fluid systems to maintain a set upstream pressure by controlling the flow of liquid through the valve. The BPR 125 may comprise a pressurized gas dome, a diaphragm or piston acted upon by the pressurized gas dome, and a fluid flow path which is occluded by the action of the diaphragm or piston.

The pressure regulator 130 with air tank may comprise an electronic pressure regulator, a chamber to contain pressurized air, an air refill port, and an air pressure gauge. The controlled output of the pressure regulator 130 with air tank may be in pneumatic communication with the pressurized gas dome of the BPR 125.

The pressure within the pressurized gas dome of the BPR 125 may be adjusted to a specific set point by adjusting the pressure regulator 130 with air tank. Fluid enters the BPR 125 through its upstream inlet 127, where it encounters and exerts pressure on the face of the diaphragm or piston in opposition to the pressure exerted by the pressurized gas dome. When the upstream fluid pressure exerted on the diaphragm or piston exceeds the loading force produced by gas within the dome, the fluid pressure pushes the diaphragm or piston into the space occupied by pressurized gas, thereby widening the flow path and allowing the fluid to flow to the downstream outlet 129 of the BPR 125 device. The widening of the flow path causes a drop in upstream pressure, which allows the diaphragm or piston to reocclude the flow path. In this way, a steady state may be reached where the upstream fluid pressure equals the pressure within the pressurized gas dome.

The downstream outlet 129 of BPR 125 may be in fluid communication with line 128, which is in fluid communication with the recirculation reservoir 140.

The effluent reservoir 135 may comprise a multiple layer Polyethylene (PE) bladder with an integrated screw or compression cap. In one embodiment, the multiple layer Polyethylene (PE) bladder may comprise a triple layer Polyethylene (PE) bladder. The effluent reservoir 135 receives the waste that is removed from the specimen or patient during the perfusion process.

The recirculation reservoir 140 may comprise a multiple layer Polyethylene (PE) bladder with an integrated screw or compression cap. In one embodiment, the multiple layer Polyethylene (PE) bladder may comprise a triple layer Polyethylene (PE) bladder. The recirculation reservoir 140 may serve as storage for the washout solution during the perfusion process.

The fluid pump 110 may comprise an input 145 and an output 150. The input 145 of the fluid pump 110 may be in fluid communication with the recirculation reservoir 140 via a pick-up line/tube 155, which may be fully submerged in the recirculation reservoir 140.

The pick-up line 155 may comprise a first branch 160 that goes to the recirculation reservoir 140 and a second branch 165 that goes to the washout solution reservoir 105. Both the first branch 160 to the recirculation reservoir 140 and the second branch 165 to the washout solution reservoir 105 have inline tubing clamps, which allow the source of liquid to be selected. When the washout clamp 170 is occluded or clamped off, liquid will be pumped from the recirculation reservoir 140, and when the recirculation reservoir pick-up line clamp 175 is occluded or clamped off, liquid will be pumped from the fresh washout solution bladders of the washout solution reservoir 105. This selection enables the operator to "prime" an empty system by introducing fresh washout solution to the main loop. The main loop is the part of the fluid circuit through which the washout solution flows during recirculation. This loop can be described as starting from the recirculation reservoir 140, flowing through the fluid pump 110 and the heat exchanger 115 to the BPR 125 and then out of the outlet side of BPR 125 to return to the recirculation reservoir 140. In the main loop, bypassed fluid not delivered to the patient returns to the recirculating reservoir 140 in a chilled state.

The output 150 of the fluid pump 110 may be in communication with the inlet 180 of the heat exchanger 115. The heat exchanger 115 is an element in a fully isolated coolant system 120; the heat energy of the perfusate is rejected into the coolant system/ice water basin 120 via the heat exchanger 115. An outlet 185 of the cooled side of the heat exchanger 115 may be in communication with the base of a first Y-adapter 190.

A first branch 195 of the Y-adapter 190 may be in fluid communication with the arterial cannula placed in the specimen. A second branch 200 of the Y-adapter 190 may be in fluid communication with the inlet side of the BPR 125. The second branch 200 of the Y-adapter 190 may comprise the upstream inlet 127 of the BPR 125

The outlet 205 of the venous cannula placed in the specimen (venous return line) may be in fluid communication with the base of a second Y-adapter 210.

A first branch 215 of the Y-adapter 210 may be in fluid communication with the recirculation reservoir 140. A second branch 220 of the Y-adapter 210 may be in fluid communication with the effluent reservoir 135. Any liquid flowing into the effluent reservoir 135 may be permanently removed from the system 100. Both branches 215, 220 of the venous return line 205 have in-line tubing clamps 225 and 230 which allow the destination of the venous return fluid to be selected. When the clamp 230 on the first branch 215 is occluded, venous return fluid flows to the effluent reservoir 135. When the clamp 225 on the second branch 220 is occluded, venous fluid returns to the recirculation reservoir 140.

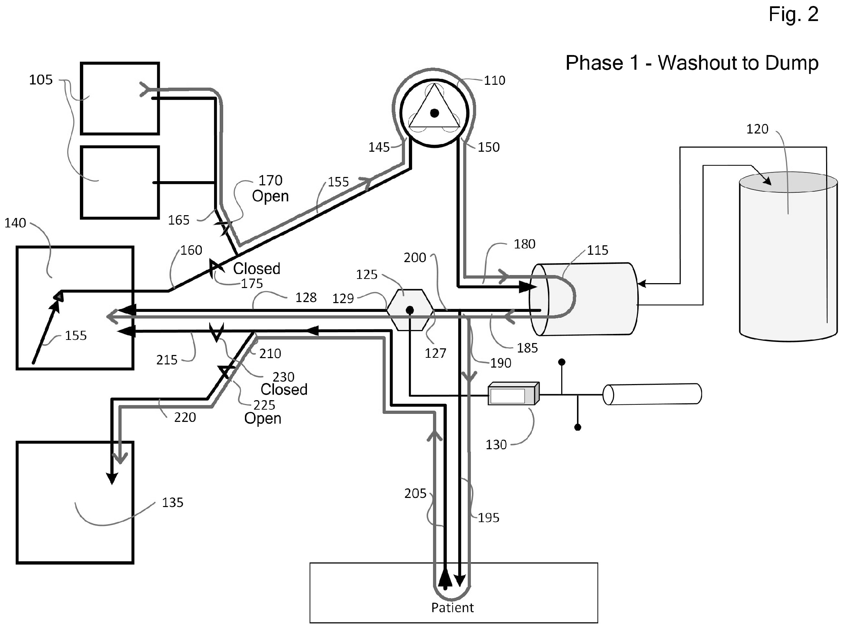

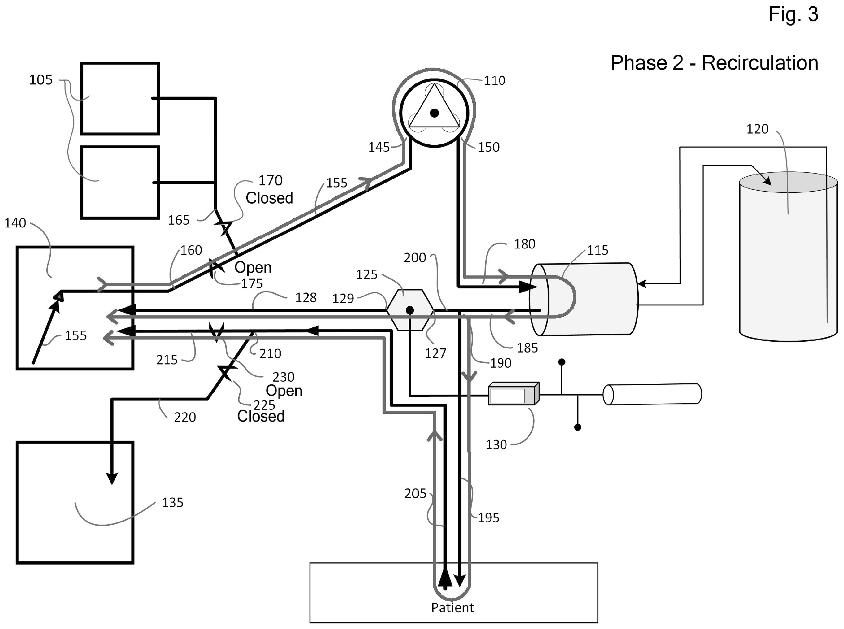

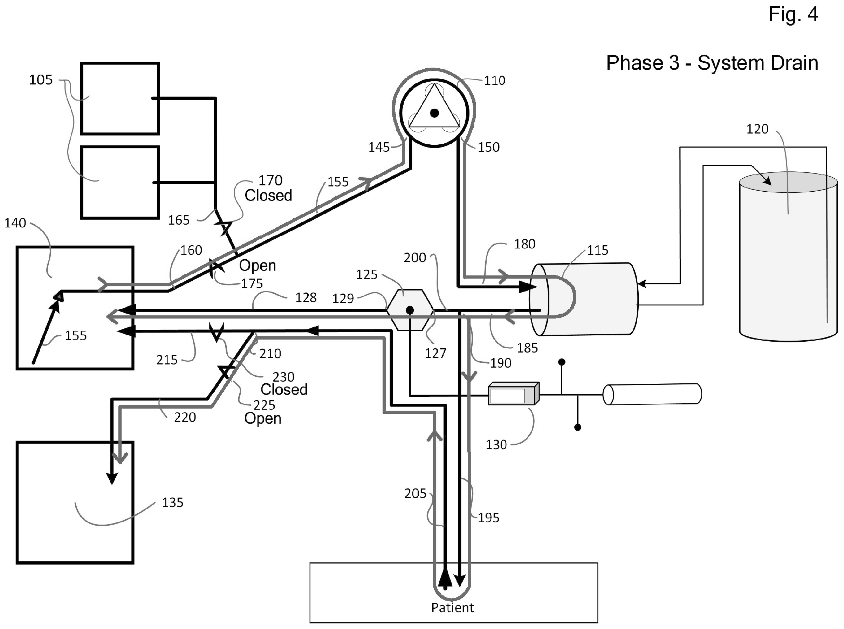

Operating the system involves three separate phases; Phase 1 washout to dump (Figure 2), Phase 2 washout to recirculation (Figure 3), and Phase 3 system drain (Figure 4). Each phase involves selecting fluid flow paths by opening and closing the inline tubing clamps described above.

In Phase 1, shown in Figure 1 and 2, washout solution may be sourced from the fresh washout fluid bladders of the washout solution reservoir 105. The flow of washout solution proceeds as indicated through the system to Y-adapter 190. The first branch 195 of the Y-adapter provides fresh washout solution to the arterial cannula in the heart of the specimen/patient. The washout solution, which does not enter the patient, flows through the second branch 200 of the Y-adapter, where it eventually enters the recirculating reservoir 140. The washout solution exiting the heart via the venous return line 205 may be directed into the effluent reservoir 135, where it will be permanently removed from the system. After a period of operation in this manner, blood cells and clotting agents will have been sufficiently washed out of the patient. The transition to Phase 2 may begin when either the volume of washout solution passed through the patient exceeds a prescribed quantity, or the washout solution leaving the patient via venous return 205 achieves visual clarity. At this point, the tubing clamp 230 may be opened and the tubing clamp 225 may be occluded, thereby redirecting venous return effluent to the recirculation reservoir 140.

In Phase 2, shown in Figures 1 and 3, flow through the venous return line 205 may be directed into the recirculation reservoir 140 where it accumulates. Once the recirculation reservoir 140 achieves a maximum volume limit, the fresh washout bladders of the washout solution reservoir 105 may be clamped off at washout clamp 170 and the recirculation reservoir pick-up line 155 is unclamped at pick-up line clamp 175. Fluid may now recirculate between the recirculating reservoir 140 and the patient. The transition to Phase 3 begins when Phase 2 exceeds a preset duration.

At any time during Phases 1 & 2, the volume of washout solution within recirculation reservoir 140 may fall outside of preset limits due to differential flow rates. To maintain the volume of washout solution within the reservoir, tubing clamp 170 and tubing clamp 175 on the washout solution pickup line 155 should be operated accordingly. When the volume within reservoir 140 reaches the minimum limit, clamp 170 is opened and clamp 175 may be closed. This has the effect of drawing fresh washout solution from the washout solution bladder 105, which eventually accumulates in the reservoir 140, either via the patient bypass branch 200 or via the venous return line 205. When the volume within reservoir 140 reaches the maximum limit, clamp 175 is opened and clamp 170 is closed. This has the effect of drawing washout solution exclusively from reservoir 140, which stops the introduction of additional liquid to the system.

In Phase 3, shown in Figure 4, the perfusion of the patient is complete, and the system may be drained. To empty all liquid in the system, the dump reservoir line 220 clamp 225 is re-opened and all remaining liquid in the system is pumped into the effluent reservoir 135.

The implementations shown and described are illustrative of the technology and its best mode and are not intended to otherwise limit the scope of the present technology in any way. Indeed, for the sake of brevity, conventional manufacturing, connection, preparation, and other functional aspects of the system may not be described in detail. Furthermore, the connecting lines shown in the various figures are intended to represent exemplary functional relationships and/or steps between the various elements. Many alternative or additional functional relationships or physical connections may be present in a practical system.

In the foregoing description, the technology has been described with reference to specific exemplary embodiments. Various modifications and changes may be made, however, without departing from the scope of the present technology as set forth. The description and figures are to be regarded in an illustrative manner, rather than a restrictive one and all such modifications are intended to be included within the scope of the present technology. Accordingly, the scope of the technology should be determined by the generic embodiments described and their legal equivalents rather than by merely the specific examples described above. For example, the steps recited in any method or process embodiment may be executed in any appropriate order and are not limited to the explicit order presented in the specific examples. Additionally, the components and/or elements recited in any system embodiment may be combined in a variety of permutations to produce substantially the same result as the present technology and are accordingly not limited to the specific configuration recited in the specific examples.

Benefits, other advantages and solutions to problems have been described above regarding particular embodiments. Any benefit, advantage, solution to problems or any element that may cause any particular benefit, advantage or solution to occur or to become more pronounced, however, is not to be construed as a critical, required or essential feature or component.

As used herein, the terms "comprises," "comprising," or any variation thereof, are intended to reference a non-exclusive inclusion, such that a process, method, article, composition or apparatus that comprises a list of elements does not include only those elements recited but may also include other elements not expressly listed or inherent to such process, method, article, composition or apparatus. Other combinations and/or modifications of the above-described structures, arrangements, applications, proportions, elements, materials or components used in the practice of the present technology, in addition to those not specifically recited, may be varied or otherwise particularly adapted to specific environments, manufacturing specifications, design parameters or other operating requirements without departing from the general principles of the same. Any terms of degree such as "substantially," "about," and "approximate" as used herein mean a reasonable amount of deviation of the modified term such that the end result is not significantly changed. For example, these terms can be construed as including a deviation of at least ±5% of the modified term if this deviation would not negate the meaning of the word it modifies.

The present technology has been described above with reference to an exemplary embodiment. However, changes and modifications may be made to the exemplary embodiment without departing from the scope of the present technology. These and other changes or modifications are intended to be included within the scope of the present technology.

## Claims

1. A perfusion and washout system for perfusing a cryogenic specimen having an arterial cannula and a venous cannula, comprising:
a washout solution reservoir;
a pump in fluid communication with the washout solution reservoir;
a heat exchanger in fluid communication with the pump;
a back pressure regulator comprising an inlet and an outlet;
a pressure regulator coupled to the back pressure regulator;
a first junction comprising a first branch and a second branch, wherein the first branch is in fluid communication with the arterial cannula of the cryogenic specimen, and wherein the second branch is in fluid communication with the inlet of the back pressure regulator;
a second junction in fluid communication with a return line from the venous cannula of the cryogenic specimen, the second junction comprising a first branch and second branch;
an effluent reservoir in fluid communication with the first branch of the second junction;
a recirculation reservoir in fluid communication with the second branch of the second junction; and
a return line from the outlet of the back pressure regulator in fluid communication with the recirculation reservoir;
wherein the back pressure regulator is configured to regulate upstream pressure at the first junction.

2. The perfusion and washout system of claim 1, further comprising a pick-up line having a first branch in communication with the recirculation reservoir and a second branch in communication with the washout solution reservoir.

3. The perfusion and washout system of claim 2, wherein a first inline tubing clamp is disposed on the first branch of the pick-up line in fluid communication with the recirculation reservoir, wherein the first inline tubing clamp is preferably configured to occlude flow from the recirculation reservoir.

4. The perfusion and washout system of claim 3, wherein a second inline tubing clamp is disposed on the second branch of the pick-up line in fluid communication with the washout solution reservoir, wherein the second inline tubing clamp is preferably configured to occlude flow from the washout solution reservoir.

5. The perfusion and washout system of claim 4, wherein the first branch of the second junction is configured to direct fluid to the effluent reservoir and the second branch is configured to direct fluid to the recirculation reservoir.

6. The perfusion and washout system of claim 4 or claim 5, wherein a third inline tubing clamp is disposed on the first branch of the second junction in fluid communication with the effluent reservoir, wherein the third inline tubing clamp is preferably configured to selectively direct fluid to the effluent reservoir.

7. The perfusion and washout system of claim 6, wherein a fourth inline tubing clamp is disposed on the second branch of the second junction in fluid communication with the recirculation reservoir, wherein the fourth inline tubing clamp is preferably configured to selectively direct fluid to the recirculation reservoir.

8. The perfusion and washout system of claim 7, wherein the system is configured to operate in a washout-to-dump mode, wherein in the washout-to-dump mode it is preferred that:
the first inline tubing clamp is occluded to prevent flow from the recirculation reservoir;
the second inline tubing clamp is open to permit flow from the washout solution reservoir;
the third inline tubing clamp is open to permit flow to the effluent reservoir; and
the fourth inline tubing clamp is occluded to prevent flow to the recirculation reservoir.

9. The perfusion and washout system of claim 7, wherein the system is configured to operate in a washout-to-recirculation mode, wherein in the washout-to-recirculation mode it is preferred that:
the first inline tubing clamp is occluded to prevent flow from the recirculation reservoir;
the second inline tubing clamp is open to permit flow from the washout solution reservoir;
the third inline tubing clamp is occluded to prevent flow to the effluent reservoir; and
the fourth inline tubing clamp is open to permit flow to the recirculation reservoir.

10. The perfusion and washout system of claim 7, wherein the system is configured to operate in a system drain mode, wherein in the system drain mode it is preferred that:
the first inline tubing clamp is open to permit flow from the recirculation reservoir;
the second inline tubing clamp is occluded to prevent flow from the washout solution reservoir;
the third inline tubing clamp is open to permit flow to the effluent reservoir; and
the fourth inline tubing clamp is occluded to prevent flow to the recirculation reservoir.

11. The perfusion and washout system of any one of the preceding claims, wherein the back pressure regulator is configured to regulate upstream pressure by controlling flow of washout solution through the second branch of the first junction.

12. The perfusion and washout system of claim 11, wherein the back pressure regulator comprises a diaphragm configured to move in response to upstream fluid pressure, wherein the diaphragm is preferably acted upon by pressure from a pressurized gas dome.

13. A method of perfusing a cryogenic specimen having an arterial cannula and a venous cannula using a perfusion and washout system, comprising:
pumping a washout solution from a washout solution reservoir through a pump and a heat exchanger toward a first junction;
delivering a first portion of the washout solution from a first branch of the first junction to the arterial cannula of the cryogenic specimen;
diverting a second portion of the washout solution from a second branch of the first junction to a back pressure regulator;
regulating, using the back pressure regulator, upstream pressure at the first junction;
returning washout solution from the back pressure regulator to a recirculation reservoir;
receiving venous return fluid from the venous cannula at a second junction;
selectively directing the venous return fluid from the second junction to either an effluent reservoir or the recirculation reservoir; and
selectively controlling flow of washout solution from either the washout solution reservoir or the recirculation reservoir using inline tubing clamps.

14. The method of claim 13, wherein the inline tubing clamps are configured to operate to perform washout-to-dump mode wherein:
flow from the washout solution reservoir is permitted;
flow from the recirculation reservoir is prevented;
venous return fluid is directed to the effluent reservoir; and
flow to the recirculation reservoir is prevented;

15. The method of claim 13, wherein the inline tubing clamps are configured to operate to washout-to-recirculation mode wherein:
flow from the washout solution reservoir is permitted;
flow from the recirculation reservoir is prevented; and
venous return fluid is directed to the recirculation reservoir; and

16. The method of claim 13, wherein the inline tubing clamps are configured to operate to a system drain mode wherein:
flow from the washout solution reservoir is prevented,
flow from the recirculation reservoir is permitted,
venous return fluid is directed to the effluent reservoir, and
flow to the recirculation reservoir is prevented.
